# FASCICULE DE BREVET EUROPEEN

(11) **EP 1 531 966 B1**
(45) Date de publication et mention de la délivrance du brevet: **26.11.2008**
(21) Numéro de dépôt: 03748207.2
(22) Date de dépôt: 11.07.2003
(51) Int. Cl.: B23P 19/00, B65G 51/02, B21J 15/32

(54) **DISPOSITIF DE STOCKAGE ET DE DISTRIBUTION DE PIECES NOTAMMENT DE RIVETS**
VORRICHTUNG ZUR SPEICHERUNG UND VERTEILUNG VON TEILEN, INSBESONDERE VON NIETEN
DEVICE FOR STORING AND DISPENSING PARTS IN PARTICULAR RIVETS

(30) Priorité: 12.07.2002 FR 0208864
(43) Date de publication de la demande: 25.05.2005
(73) Titulaire: F2 C2 System, 31130 Flourens (FR); Auriol, Jean-Marc, F-31130 Balma (FR); Bornes, Philippe, 31130 Flourens (FR)
(72) Inventeur: AURIOL, Jean-Marc, F-31130 Flourens (FR); BORNES, Philippe, F-31130 Flourens (FR)
(74) Mandataire: Thurgood, Alexander John
(86) Numéro de dépôt international: PCT/FR2003/002201
(87) Numéro de publication internationale: WO 2004/007142

(56) Documents cités:
- EP-A- 0 511 093
- EP-A- 0 536 779
- EP-A- 0 618 022
- EP-A- 0 995 537
- WO-A-00/07751
- WO-A-91/18695
- WO-A-95/34391

## Description

### DOMAINE D'APPLICATION DE L'INVENTION

La présente invention concerne un dispositif de stockage et de distribution de pièces tels que des rivets selon le préambule de la revendication 1. La présente invention a trait au domaine du stockage et de la distribution de pièces et notamment aux adaptations permettant de réaliser dans les meilleures conditions, le stockage et la distribution de pièces tels les rivets à un outil telle une tête de perçage/rivetage.

### DESCRIPTION DE L'ART ANTÉRIEUR

Il existe dans l'art antérieur, plusieurs moyens de stockage, de sélection et de distribution de rivets, tels ceux décrits notamment dans les documents EP 0 855 236, EP 0 373 685, WO 95/34391 et WO 91/18695.

Il existe notamment dans l'art antérieur comme décrit dans la demande européenne n° EP 0 511 093, des dispositifs d'emmagasinage et de distribution de pièces tels que des rivets qui, recevant dans des cassettes différentes les rivets stockés par type ou catégorie, assurent à la demande et au moyen d'un fluide porteur tel de l'air comprimé, la distribution unitaire du rivet requis par l'actionneur telle une tête de perçage/rivetage liée audit dispositif.

Les demandeurs ont constaté que les dispositifs d'emmagasinage décrits dans les documents cités plus haut nécessitaient souvent une cinématique d'orientation de la pièce pour chaque cassette et donc pour chaque type de rivet, avant son arrivée dans le module de distribution, ce qui a pour conséquence immédiate de grever le coût d'un tel dispositif. De plus, ladite cinématique a pour désavantage de n'être adaptée qu'à un seul type de pièces obligeant les utilisateurs à n'utiliser l'emplacement de cassette correspondant que pour un seul type de rivet ce qui provoque inévitablement un manque de flexibilité du dispositif de distribution.

Les demandeurs ont également constaté que la succession des opérations de distribution unitaire, d'orientation et d'alimentation vers l'actionneur provoquait l'addition des durées de chaque opération pour obtenir un temps de distribution des pièces particulièrement long.

Il existe également dans l'art antérieur un système global d'alimentation en éléments de fixation d'un outil d'ajustement d'éléments de fixation décrit dans la demande internationale n° WO 00/07751 qui a pour spécificité principale de proposer un réservoir tampon d'éléments de fixation solidaire de l'outil, le tube d'alimentation susceptible de venir remplir ledit réservoir tampon étant amovible pour autoriser le déplacement de l'outil avec ledit réservoir tampon. Dans ce document, sont également décrits plusieurs sous-ensembles fonctionnels de stockage et de distribution d'éléments de fixation. Ainsi, par exemple, un des sous-ensembles illustrés est constitué par un dispositif de stockage et de distribution de pièces tels que des rivets, du type de celui comportant un châssis aménagé de zones d'accueil de conteneurs de stockage de pièces tels que des rivets, toutes orientées de la même façon, pouvant être mises en mouvement au moyen d'un fluide de transport. Lesdits conteneurs peuvent être empilés et disposés en rang et par colonne, un chariot comportant un mécanisme de libération des pièces est associé à chaque colonne. Ce chariot déplace un tube de distribution faisant ainsi passer la ou les pièces, du conteneur de stockage vers le tube de distribution. Ce chariot est susceptible de se déplacer dans un plan de déplacement, c'est à dire selon deux axes. Les conteneurs peuvent stocker par rang ou par colonne des rivets différents, chaque colonne et chaque tube de distribution y associé étant ainsi susceptibles de fournir un rivet différent de celui fourni par la colonne ou le tube adjacent. Ainsi, le système décrit dans cette demande propose de lier un sous-ensemble de stockage de pièces tels que des rivets se présentant sous la forme de conteneurs présentant des pièces toutes orientées de la même façon, susceptibles selon le conteneur de stocker d'un conteneur sur l'autre des rivets différents à un outil d'utilisation/ajustement desdites pièces au moyen d'un réseau de tubes de distribution dont une première extrémité est associée de façon amovible audit outil et dont l'autre extrémité est associée pour chaque tube à un chariot différent comportant un mécanisme de libération desdites pièces, ledit chariot coopérant avec ledit sous-ensembles de stockage.

Le document WO-00/07751 est l'état de la technique le plus proche et décrit un dispositif selon le préambule de la revendication 1. Un autre distributeur décrit dans la demande européenne n° EP 0 536 779 propose à partir de l'extrémité d'arrivée de deux tubes de faire correspondre l'extrémité d'entrée d'un seul tube de distribution lequel communique avec l'effecteur. En dehors de la mobilité limitée de l'extrémité d'entrée par rapport aux extrémités d'arrivée (le mouvement se bornant à un simple va-et-vient), ce distributeur ne propose au niveau de la partie mobile qu'un seul tube de distribution comme pour le dispositif décrit dans la demande internationale n° WO 00/07751. En conséquence, dans le cadre d'une application à la distribution de pièces trop différentes, ce seul tube ne pourrait à lui seul permettre dans de bonnes conditions, l'alimentation de l'effecteur.

Il en est de même pour le moyen mobile de sélection décrit dans la demande internationale n° WO 95/34391, qui n'est associé qu'à un seul tube.

### BRÈVE DESCRIPTION DE L'INVENTION

Partant de cet état de fait et afin de mieux répondre aux critères spécifiques de la distribution de pièces tels que les rivets, les demandeurs ont mené des recherches sur un nouveau dispositif de stockage et de distribution de pièces tels les rivets pour diminuer les coûts de fabrication d'un tel dispositif ainsi que la durée de distribution des pièces par ce type de dispositif.

Ces recherches ont abouti à la conception d'un dispositif de stockage et de distribution de pièces tels que les rivets, très simplifié et beaucoup plus rapide tout en permettant d'obvier aux inconvénients précités.

Le dispositif de stockage et de distribution de pièces tels que des rivets de l'invention est du type de celui comportant un châssis aménagé de zones d'accueil de cassettes de stockage de pièces tels que des rivets mises en mouvement au moyen d'un fluide de transport.

Le dispositif comporte au moins une tête mobile de distribution réalisant la prisse et l'évacuation unitaires des pièces stockées dans la cassette devant laquelle elle vient se placer. Selon la caractéristique principale de l'invention ladite tête mobile est associée à une pluralité de tubes de distribution dont le diamètre correspond au type de pièces à distribuer, et les cassettes sont équipées chacune d'une étiquette spécifique présentant des moyens d'identification coopérant avec une ou plusieurs têtes de lecture associées à la tête de distribution afin que la tête puisse disposer l'extrémité du bon tube coaxialement à la sortie de la bonne cassette.

Cette caractéristique est particulièrement avantageuse en ce qu'elle met en oeuvre un seul élément mobile pour une pluralité de cassettes ce qui permet d'économiser la cinématique de l'art antérieur ainsi que la durée de sa mise en oeuvre lors de son fonctionnement.

En conséquence, en réalisant un dispositif de stockage et de distribution comportant un module de distribution mobile évitant la présence du système d'orientation de la pièce qui permettait de faire le lien entre le module de stockage et le module de distribution, les demandeurs ont imaginé un nouveau mode de stockage et de distribution permettant d'obvier aux inconvénients de l'art antérieur.

Malgré la multiplicité des types de rivets et la variation du positionnement de leur conteneur de stockage, la tête mobile de l'invention permet à elle seule, d'assurer une distribution des pièces là où dans l'art antérieur plusieurs chariots étaient nécessaires. La cinématique et les moyens de mise en mouvement s'en trouvent largement simplifiés.

Si le chariot décrit dans la demande internationale n° WO 00/07751 peut se rapprocher de la tête mobile de l'invention et si, les conteneurs empilés peuvent se rapprocher desdites cassettes décrites, il apparaît, que la tête mobile de l'invention est associée à une pluralité de tubes de distribution dont le diamètre correspond au type de pièces à distribuer, c'est à dire que les tubes ont des diamètres et éventuellement des profils intérieurs différents selon la pièce à distribuer. En effet, pour autoriser une mise en mouvement correcte et donc une bonne distribution de la pièce extraite de la cassette dans laquelle elle est stockée, les tubes de communication entre le dispositif et l'effecteur auquel il est lié, doivent être adaptés au diamètre et/ou à la forme de ladite pièce. Ces tubes sont avantageusement réalisés en matériau souple qui leur permet de garantir une flexibilité et un canal de déplacement pour la pièce quelle que soit la position de ladite tête mobile.

Les concepts fondamentaux de l'invention venant d'être décrits d'autres caractéristiques et d'autres avantages apparaîtront à la lecture de la description qui suit et en regard des dessins annexés, d'un mode de réalisation d'un dispositif de stockage et de distribution de pièces tels que des rivets.

### BRÈVE DESCRIPTION DES DESSINS

La figure 1, est un dessin schématique en perpective partiellement éclatée d'un mode de réalisation d'un dispositif conforme à l'invention,
La figure 2 est un dessin schématique en vue de face du mode de réalisation du dispositif illustré en figure 1,
La figure 3 est un dessin schématique en vue de côté du mode de réalisation du dispositif illustré en figure 1.

### DESCRIPTION DÉTAILLÉE APPUYÉE SUR LES DESSINS

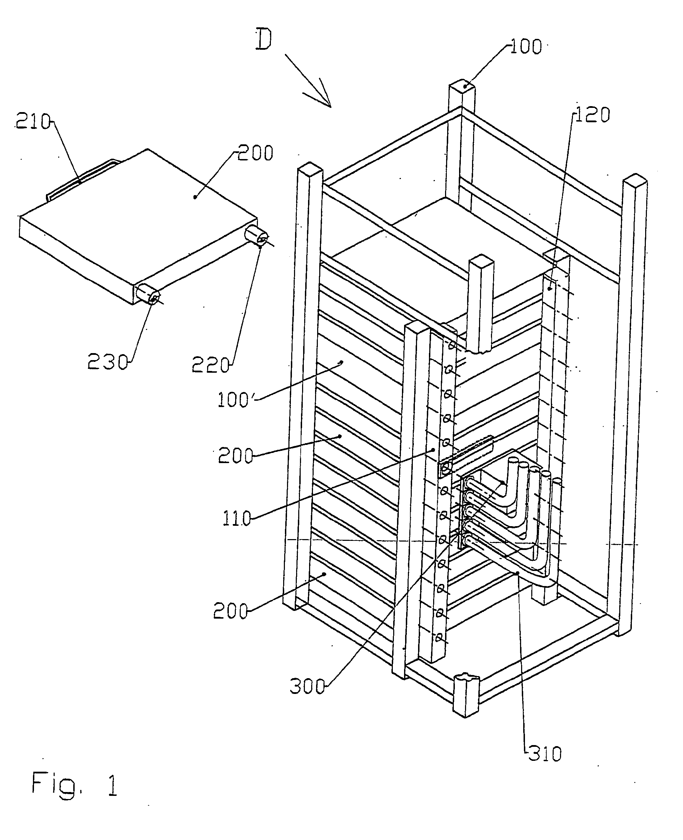

Comme illustré sur le dessin de la figure 1, le dispositif de stockage et de distribution de pièces tels que des rivets référencé D dans son ensemble est du type de celui comportant un châssis 100 aménagé de zones d'accueil 100' de cassettes de stockage de rivets 200 alimentées en fluide de transport et devant lesquelles se déplace une tête mobile de distribution 300.

Selon le mode de réalisation illustré, ces cassettes de transport 200 sont avantageusement constituées d'un parallélépipède muni d'une poignée de manutention 210 et présentant au moins un orifice 220 d'entrée du fluide de transport et au moins un orifice 230 de sortie des pièces stockées. Chaque cassette 200 assure le stockage d'un seul type de rivet à l'intérieur d'un tube de stockage enroulé dans cette dernière. Selon le mode de réalisation illustré, les cassettes 200 présentent les mêmes dimensions extérieures afin de s'adapter et d'être accueillies dans n'importe quelle zone d'accueil aménagée dans le châssis 100 du dispositif D.

Selon un autre mode de réalisation, un seul orifice 230 sert aussi bien à la sortie des éléments stockés qu'à l'introduction du fluide de transport à l'intérieur de la cassette 200.

Selon le mode de réalisation non limitatif illustré, les zones d'accueil 100' ménagées dans le châssis 100 pour les cassettes 200 sont disposées de façon à ce que les cassettes 200 forment une colonne verticale permettant de placer dans un même premier plan vertical les axes des orifices d'entrée d'air 220 sous pression et dans un deuxième plan vertical les axes des orifices de sortie 230 des éléments stockés. Ces zones d'accueil présentent chacune des moyens de mise en position et de maintien en position facilitant l'interchangeabilité des cassettes.

Chaque cassette 200 s'associe en outre à un sas d'attente autorisant la sortie unitaire des pièces qu'elle stocke et avec lequel vient communiquer la tête mobile 300. Ces sas sont, selon le mode de réalisation illustré, regroupés dans un même montant vertical 110 associé au châssis 100 du dispositif D.

De plus, chaque cassette 200 s'associe au niveau de son orifice d'alimentation 220 avec un point d'alimentation en fluide de transport lié au châssis 100. Ces points d'alimentation sont, selon le mode de réalisation illustré, regroupés dans un même montant vertical 120 associé au châssis 100 du dispositif D.

Selon un autre mode de réalisation, l'ensemble des cassettes 200 est en communication avec un seul montant 110 contrôlant aussi bien la sortie des pièces stockées que l'entrée de fluide de transport.

Ainsi, chaque cassette 200 dispose, une fois installée dans le châssis 100, d'un sas contrôlant la sortie des éléments qu'elle stocke ainsi que d'une source d'alimentation en fluide de transport assurant la mise en mouvement desdits éléments.

Le fluide de transport est, selon un mode de réalisation couramment utilisé, de l'air sous pression qui, alimentant en permanence les modules de stockage constitué par les cassettes, assure la sortie des éléments stockés lorsque cette dernière est autorisée. Ce fluide met en mouvement les rivets à l'intérieur des cassettes et les met en position un par un, au fur et à mesure de leur libération dans les sas d'attente prévus à cet effet et alignés dans la colonne 110.

Selon l'invention, le dispositif D est équipé d'une tête mobile de distribution 300 réalisant la prise et l'évacuation unitaire des pièces stockées dans la cassette 210 devant laquelle elle vient se placer, cette pièce étant ensuite mise en mouvement au moyen du fluide de transport pour être envoyée vers l'effecteur qui l'a requise.

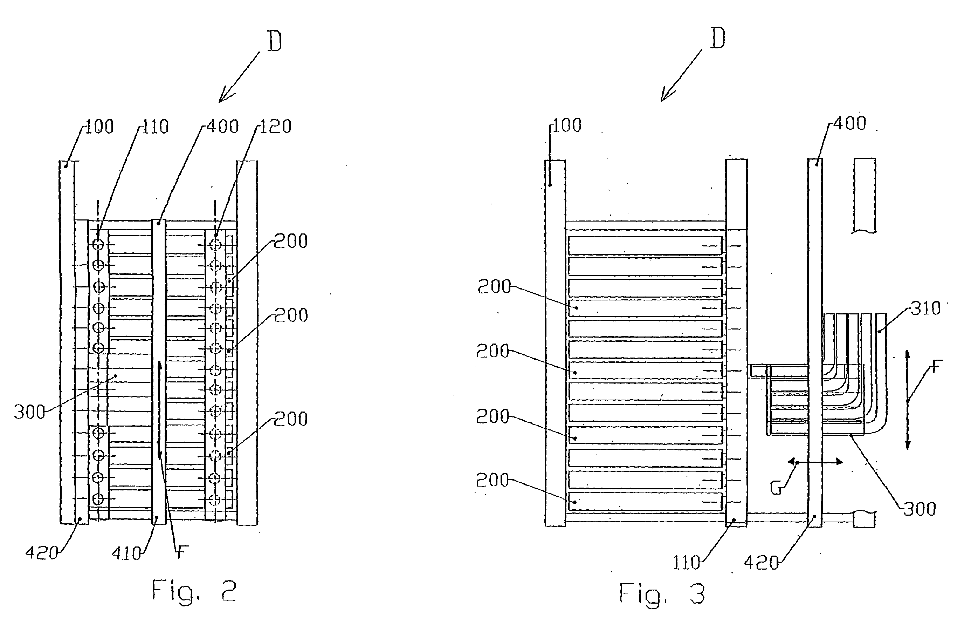

Comme illustrée sur les dessins des figures 2 et 3, cette tête mobile 300 est associée à une structure logique 400 créant un plan de déplacement de ladite tête 300 devant lesdites cassettes 200. Ainsi, bien que le mode de réalisation illustré présente une tête mobile selon un seul axe, la disposition des cassettes et la structure logique y associée peuvent avoir pour conséquence de voir la tête mobile selon deux axes sans pour autant sortir du cadre de l'invention.

Cette structure logique 400 est avantageusement matérialisée par deux montants verticaux 410 et 420 et assure la mise en mouvement et/ou le guidage de ladite tête 300 selon un axe vertical selon la double flèche F. Ce mouvement vertical a pour utilité d'assurer le passage de la tête 300 d'une cassette 200 à une autre.

Selon un autre mode de réalisation préféré, un des montants assure la mise en mouvement de la tête 300 alors que l'autre assure le guidage en translation.

Selon un mode de réalisation, la mise en mouvement de la tête 300 selon la double flèche F est réalisée au moyen d'un moteur pas-à-pas qui permet une bonne mise en position de la tête lorsque cette dernière devra se placer à un endroit précis devant la colonne de cassettes 200.

Selon un autre mode de réalisation, la mise en mouvement de la tête 300 selon la double flèche F est réalisée au moyen d'au moins un moteur linéaire. Selon d'autres modes de réalisation, ladite mise en mouvement peut être réalisée au moyen d'un actionneur pneumatique ou bien au moyen d'un moteur de type "brushless".

Conformément à l'invention, ladite tête mobile 300 est associée à une pluralité de tubes de distribution 310 dont les diamètres correspondent au type de pièces à distribuer. En effet, pour autoriser une mise en mouvement correcte et donc une bonne distribution de la pièce extraite de la cassette 200 dans laquelle elle est stockée, les tubes de communication 310 entre le dispositif D et l'effecteur auquel il est lié, doivent être adaptés au diamètre de ladite pièce. Ces tubes 310 de la tête 300 sont avantageusement réalisés en matériau souple qui leur permet de garantir une flexibilité et un canal de déplacement pour la pièce quelle que soit la position de ladite tête mobile 300. Ainsi, lorsque le dispositif est associé à un effecteur, selon le diamètre de la pièce requise par l'effecteur, la tête mobile 300 place l'extrémité d'un seul tube 310 d'un diamètre adapté devant l'orifice de sortie de la cassette 200 stockant les pièces requises. En conséquence pour assurer cette fonction, les tubes associés à ladite tête sont de diamètre et/ou de profil différents, et la tête mobile assure la mise en mouvement d'une de leurs extrémités.

Pour des raisons de clarté, seule l'extrémité liée à la tête 300 de ces tubes 310 a été illustrée dans les figures 1 et 3. La deuxième extrémité des tubes peut indifféremment être liée à un même effecteur ou liée à des effecteurs différents.

Ces tubes 310 sont disposés parallèlement aux axes des orifices de sortie 230 desdites cassettes 200 stockant les pièces à distribuer et viennent par mouvement de ladite tête mobile 300 se placer coaxialement auxdits axes. Plus précisément, c'est l'extrémité d'un tube qui vient se placer coaxialement à l'axes des orifices de sortie.

Comme illustrés sur les dessins des figures 1 et 3, lesdits tubes 310 de distribution passent d'une position où ils sont mis en mouvement devant les cassettes 200 au moyen de la tête mobile 300 à une position où une de leurs extrémités se met en communication avec la cassette 200 contenant les pièces à distribuer et vice-versa selon la double flèche G (cf figure 3).

Ce mouvement est avantageusement mis en oeuvre par un moyen de mise en mouvement de type vérin équipant chaque tube 310 lié à ladite tête mobile 300. Ainsi, lorsque un type d'élément doit être distribué, la tête mobile 300 se déplace verticalement le long des montants 410 et 420 selon la double flèche F pour placer un tube 310 adapté coaxialement à l'orifice de sortie 230 de la cassette de stockage 200 de l'élément requis. Une fois positionnée coaxialement, l'extrémité du tube 310 est mise en mouvement horizontalement au moyen de son vérin selon la double flèche G de façon à s'engager dans le sas correspondant.

Ainsi, la tête mobile 300 est aménagée de façon à accueillir des moyens de mise en mouvement horizontal pour chaque tube de distribution 310 dont elle assure la mobilité verticale de l'extrémité.

Ces extrémités de tube 310 sont avantageusement équipées d'un cône d'auto-centrage afin que leur introduction dans la rampe de sas en soit facilitée.

Bien que la structure logique illustrée ne propose qu'une mise en mouvement selon deux axes symbolisés par les doubles flèches F et G, il est parfaitement envisageable de réaliser un dispositif D adoptant une structure logique 400 proposant trois axes de déplacement sans sortir du cadre de l'invention élargissant de ce fait le plan de déplacement. Bien entendu, ce mouvement additionnel ne se justifie que dans le cas où le module de stockage est constitué non par une seule colonne de cassettes 200 mais par une pluralité de colonnes, offrant ainsi un large choix de pièces à distribuer. Dans ce cas, le châssis 100 du dispositif 200 est préformé pour accueillir et former lesdites colonnes.

Le nombre de cassettes 200 ainsi que le nombre de tubes 310 de distribution compliquent l'orientation de la tête mobile de distribution.

Selon la caractéristique principale de l'invention les cassettes 200 sont équipées chacune d'une étiquette spécifique présentant des moyens d'identification coopérant avec une ou plusieurs têtes de lecture associées à ladite tête de distribution 300 afin que la tête puisse disposer l'extrémité du bon tube coaxialement à la sortie de la bonne cassette 200. En conséquence, les cassettes peuvent être rangées sans ordre préétabli dans le dispositif D car la tête de lecture associée à la tête mobile permet le bon positionnement de la tête mobile et l'utilisation du bon tube de distribution.

De même, au moyen desdites étiquettes, une unité centrale assure la gestion des stocks et du remplacement des cassettes. En effet, chaque pièce distribuée peut être ainsi comptabilisée ce qui permet de gérer avec un temps d'avance le renouvellement des cassettes.

De plus, le dispositif de l'invention permet de ne pas dédier les emplacements de cassettes 200 à un seul type d'éléments à distribuer ce qui permet de ne pas changer de programmation à chaque changement d'emplacement de tel ou tel type de pièce à distribuer. Le procédé d'identification permet ainsi d'améliorer non seulement la flexibilité du dispositif de distribution mais également la traçabilité des composants distribués.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

## Revendications

1. Dispositif de stockage et de distribution (D) de pièces tels que des rivets, du type de celui comportant un châssis (100) aménagé de zones d'accueil (100') de cassettes de stockage (200) de pièces tels que des rivets mises en mouvement au moyen d'un fluide de transport, au moins une tête mobile (300) de distribution réalisant la prise et l'évacuation unitaire des pièces stockées dans la cassette (200) devant laquelle elle vient se placer, **caractérisé en ce que** ladite tête mobile est associée à une pluralité de tubes de distribution (310) dont le diamètre correspond au type de pièces à distribuer, les cassettes (200) sont équipées chacune d'une étiquette spécifique présentant des moyens d'identification coopérant avec une ou plusieurs têtes de lecture associées à la tête de distribution (200) afin que la tête (200) puisse disposer l'extrémité du bon tube (310) coaxialement à la sortie de la bonne cassette (200).

2. Dispositif (D) selon la revendication 1, **CARACTÉRISÉ PAR LE FAIT QUE** ladite tête mobile (300) est associée à une structure logique (400) créant un plan de déplacement de ladite tête (300) devant lesdites cassettes (200).

3. Dispositif (D) selon la revendication 1 du type de celui associé à un effecteur, **CARACTÉRISÉ PAR LE FAIT QUE** selon le diamètre de la pièce requise par l'effecteur, la tête mobile (300) place l'extrémité d'un tube (310) d'un diamètre adapté devant l'orifice de sortie de la cassette (200) stockant les pièces requises.

4. Dispositif (D) selon la revendication 1, dans lequel les cassettes (200) disposent d'un orifice (230) de sortie des pièces stockées, **CARACTÉRISÉ PAR LE FAIT QUE** lesdits tubes (310) de la tête (300) sont disposés parallèlement aux axes desdits orifices de sortie (230) des cassettes (200) stockant les pièces à distribuer et viennent par mouvement de ladite tête mobile (300) se placer coaxialement auxdits axes.

5. Dispositif (D) selon la revendication 1, **CARACTÉRISÉ PAR LE FAIT QUE** lesdits tubes de distribution (310) de la tête (300) passent d'une position où ils sont mis en mouvement au moyen de la tête mobile (300) à une position où une de leurs extrémités se met en communication avec la cassette (200) contenant les pièces à distribuer et vice-versa.

6. Dispositif (D) selon la revendication 1, **CARACTÉRISÉ PAR LE FAIT QUE** chaque cassette (200) s'associe à un sas d'attente (110) autorisant la sortie unitaire des pièces qu'elle stocke et avec lequel vient communiquer la tête mobile (300).

## Claims

1. Storage and distribution device (D) for parts such as rivets, of the type as that with a body (100) equipped with zones (100') to accommodate storage cartridges (200) for parts such as rivets, moved by a transport fluid, at least one moving distribution head (300) which unitarily collects and evacuates the parts stored in the cartridge (200) in front of which it positions itself, **characterised in that** the said mobile head is associated to a number of distribution tubes (310) whose diameter corresponds to the type of parts to be distributed, the cartridges (200) are each equipped with a specific label with means of identification cooperating with one or more reading heads associated to the distribution head (200) so that the head (200) can position the end of the correct tube (310) coaxially to the outlet of the correct cartridge (200).

2. Device (D) according to claim 1, **characterised in that** the said mobile head (300) is associated to a logic structure (400) creating a displacement plane of the said head (300) in front of the said cartridges (200).

3. Device (D) according to claim 1, of the type as that associated to an applicator, **characterised in that** according to the diameter of the part required by the applicator, the mobile head (300) positions the end of a tube (310) of a suitable diameter in front of the outlet orifice of the cartridge (200) storing the parts required.

4. Device (D) according to claim 1, in which the cartridges (200) have a stored part outlet orifice (230), **characterised in that** the said tubes (310) of the head (300) are positioned in parallel to the axes of the outlet orifices (230) of the said cartridges (200) storing the parts to be distributed and via the movement of the said mobile head (300) are positioned coaxially to the axes of the outlet orifices.

5. Device (D) according to claim 1, **characterised in that** the said distribution tubes (310) of the head (300) move from a position where they are moved by means of the mobile head (300) to a position where one of their ends communicates with the cartridge (200) containing the parts to be distributed and vice versa.

6. Device (D) according to claim 1, **characterised in that** each cartridge (200) is associated to a wait chamber (110) that authorises the unitary exit of the parts it stores and with which the mobile head (300) communicates.

## Patentansprüche

1. Vorrichtung zur Aufbewahrung und Ausgabe (D) von Teilen, wie etwa Nieten, von der Art, die ein Gestell (100), das mit Aufnahmebereichen (100") für Kassetten (200) zur Aufbewahrung von Teilen, wie etwa Nieten, die mittels einer Transportflüssigkeit in Bewegung versetzt werden, ausgestattet ist, und mindestens einen beweglichen Ausgabekopf (300) umfasst, der die Einzelaufnahme und -ausgabe der Teile ausführt, die in jener Kassette (200) aufbewahrt sind, vor welcher er sich platziert, **dadurch gekennzeichnet, dass** der bewegliche Kopf mit mehreren Ausgabekanälen (310) verbunden ist, deren Durchmesser der Art der auszugebenden Teile entspricht, dass die Kassetten (200) jeweils mit einer spezifischen Etikette versehen sind, die Identifikationsmittel aufweist, die mit einem oder mehreren Leseköpfen zusammenwirken, die mit dem Ausgabekopf (200) verbunden sind, damit der Kopf (200) das Ende des richtigen Kanals (310) koaxial zum Ausgang der richtigen Kassette (200) anordnen kann.

2. Vorrichtung (D) nach Anspruch 1, **dadurch gekennzeichnet, dass** der bewegliche Kopf (300) mit einer Logikstruktur (400) verbunden ist, die einen Plan für die Verschiebung des Kopfes (300) vor den Kassetten (200) erstellt.

3. Vorrichtung (D) nach Anspruch 1, von der Art, die mit einem Effektor verbunden ist, **dadurch gekennzeichnet, dass** je nach Durchmesser des vom Effektor geforderten Teils, der bewegliche Kopf (300) das Ende eines Kanals (310) mit passendem Durchmesser vor der Ausgangsöffnung jener Kassette (200) platziert, in der die geforderten Teile aufbewahrt sind.

4. Vorrichtung (D) nach Anspruch 1, in der die Kassetten (200) eine Ausgangsöffnung (230) für die aufbewahrten Teile aufweisen, **dadurch gekennzeichnet, dass** die Kanäle (310) des Kopfes (300) parallel zu den Achsen der Ausgangsöffnungen (230) der Kassetten (200), in denen die auszugebenden Teile aufbewahrt sind, angeordnet sind und sich durch die Bewegung des beweglichen Kopfes (300) koaxial zu den Achsen platzieren.

5. Vorrichtung (D) nach Anspruch 1, **dadurch gekennzeichnet, dass** die Ausgabekanäle (310) des Kopfes (300) von einer Position, in der sie mittels des beweglichen Kopfes (300) in Bewegung versetzt werden, in eine Position wechseln, in der sich eines ihrer Enden mit der Kassette (200), welche die auszugebenden Teile enthält, in Verbindung setzt, und umgekehrt.

6. Vorrichtung (D) nach Anspruch 1, **dadurch gekennzeichnet, dass** sich jede Kassette (200) mit einer Warteschleuse (110) verbindet, die die Einzelausgabe der Teile ermöglicht, die sie aufbewahrt, und mit welcher der bewegliche Kopf (300) kommuniziert.
